# EUROPEAN PATENT SPECIFICATION

(11) **EP 3 983 780 B1**
(45) Date of publication and mention of the grant of the patent: **19.04.2023**
(21) Application number: 20740102.7
(22) Date of filing: 09.06.2020
(51) Int. Cl.: G01N 21/43

(54) **METHOD AND DEVICE FOR CHARACTERIZING A MEDIUM USING REFRACTIVE INDEX**
VERFAHREN UND VORRICHTUNG ZUR CHARAKTERISIERUNG EINES MEDIUMS MIT EINEM BRECHUNGSINDEX
PROCÉDÉ ET DISPOSITIF DE CARACTÉRISATION D'UN MILIEU À L'AIDE D'UN INDICE DE RÉFRACTION

(30) Priority: 11.06.2019 US 201962860062 P
(43) Date of publication of application: 20.04.2022
(73) Proprietor: Scully Signal Company, Wilmington, MA 01887 (US)
(72) Inventor: PATERSON, Sean, Wilmington, MA 01887 (US)
(74) Representative: Carroll, Christopher P.
(86) International application number: PCT/US2020/036758
(87) International publication number: WO 2020/251919

(56) References cited:
- EP-A1- 0 027 099
- EP-A2- 0 128 301
- GB-A- 2 105 034
- US-B2- 10 261 064

## Description

### BACKGROUND

There are many different types of liquid products or fluids in use, e.g., aviation fuel, automotive fuel, diesel fuel, etc., in addition to, for example, pesticides, acids and other chemicals. Multiple different products may be transported in a single vehicle albeit in different compartments. For example, a single tanker truck may carry different types, or grades, of fuel at the same time. Of course, each type of fuel or liquid is meant to be kept in its own respective compartment.

It is, therefore, important that cross-contamination be prevented, i.e., the wrong fluid being placed in the wrong compartment or a fluid being otherwise mis-identified. There are many opportunities where this event may occur. It is imperative that the correct liquid be identified and placed in the correct location, or at least prevented from being improperly dispensed, as this impacts inventory, billing and safety.

In the fuel delivery industry, systems are known for trying to prevent this cross-contamination either in transport vehicles or upon delivery.

What is needed, however, is a better system and/or device for identifying a fluid in order to prevent a cross-contamination event.

US 10261064B2 discloses a sensing method using the sensor, which can identify similar fuel oil in real time. The optical oil component sensor includes a light source unit, a reference optical waveguide, configured to guide light thereinto, for receiving and outputting light emitted from the light source unit, a sensing optical waveguide, configured to guide light thereinto, for receiving and outputting light emitted from the light source unit, wherein a portion of the sensing optical waveguide is formed to be in contact with the test target oil. EP0128301A2 discloses a refractometer with a measuring sensor and a reference sensor for temperature compensation specified, in which, for the purpose of creating a real hand-held device with universal application, the measuring sensor and reference sensor are combined to form a measuring probe which is connected via a flexible fiber optic cable to a housing. GB2105034A describes a system useful for sensing the presence of an impurity in a hostile or remote environment using an optical waveguide sensor (16) disposed within and coupled to the environment. The waveguide sensor comprises the core of a fiber optic cable with its cladding material removed. EP0027099B1 describes an apparatus for providing a light signal representative of the level or of the refractive index of a liquid.

### SUMMARY

The invention is as defined in the appended set of claims. In one aspect of the present disclosure, there is a device for measuring an optical characteristic of a fluid under test, comprising: a first light pipe defining a first light path running from a first pipe input to a first pipe output; a second light pipe, defining a second light path separate from the first light path, running from a second pipe input to a second pipe output; and a mount coupled to the first and second light pipes, the mount defining a separation of a first space from a second space, wherein the first light pipe comprises a first material with a first predetermined refractive index (RI) value, wherein the second light pipe comprises a second material with a second predetermined RI value, wherein a sensing portion of the first light pipe is disposed in the first space, and wherein the second light pipe is disposed entirely in the second space.

The device may further comprise: a first light source configured and arranged to provide a first light input signal to the first pipe input; a first light detector configured and arranged to receive a first light output signal from the first pipe output; a second light source configured and arranged to provide a second light input signal to the second pipe input; and a second light detector configured and arranged to receive a second light output signal from the second pipe output.

The device may further comprise: a controller, coupled to the first and second light detectors, configured to compare the first and second light output signals to one another and to determine the optical characteristic of the fluid as a function of the comparison.

In an aspect of the device the first and second predetermined RI values are the same. In another aspect, the first and second predetermined RI values are different.

In an aspect of the device the second light pipe and the first light pipe have a common input.

In another aspect of the device there is a respective microlens array provided at each of the first pipe input, the first pipe output, the second pipe input and the second pipe output.

In another aspect of the present disclosure there is a system for characterizing a fluid in a first space, comprising: a structure separating the first space from a second space; an optical characteristic measuring device, coupled to the separating structure. The optical characteristic measuring device comprises a first light pipe defining a first light path running from a first pipe input to a first pipe output, the first light pipe comprising a sensing portion; a second light pipe, defining a second light path separate from the first light path, running from a second pipe input to a second pipe output; and a mount coupled to the first and second light pipes, wherein the first light pipe comprises a first material with a first predetermined refractive index (RI) value, wherein the second light pipe comprises a second material with a second predetermined RI value, wherein the mount is coupled to the separating structure such that the sensing portion of the first light pipe is disposed in the first space and the second light pipe is disposed entirely in the second space. Further provided is a first light source configured and arranged to provide a first light input signal to the first pipe input; a first light detector configured and arranged to receive a first light output signal from the first pipe output; a second light source configured and arranged to provide a second light input signal to the second pipe input; a second light detector configured and arranged to receive a second light output signal from the second pipe output; and a controller, coupled to the first and second light detectors, configured to compare the first and second light output signals to one another and to characterize the fluid in the first space as a function of the comparison.

In one aspect a known fluid is provided in the second space.

In another aspect of the present disclosure there is a method of characterizing a fluid under test in a first space, the method comprising: providing a first light pipe defining a first light path running from a first pipe input to a first pipe output, wherein the first light pipe comprises a first material with a first predetermined refractive index (RI) value; providing a second light pipe, defining a second light path separate from the first light path, running from a second pipe input to a second pipe output, wherein the second light pipe comprises the first material a second material with a second predetermined RI value; positioning a sensing portion of the first light pipe in the first space; positioning the second light pipe entirely in a second space separate from the first space; providing a first light input signal to the first pipe input; providing a second light input signal to the second pipe input; receiving, at a first light detector, a first light output signal from the first pipe output; receiving, at a second light detector, a second light output signal from the second pipe output; and determining, with a controller coupled to the first and second light detectors, a characterization of the fluid under test by comparing the first and second light output signals to one another.

### BRIEF DESCRIPTION OF THE DRAWINGS

Various aspects of the disclosure are discussed below with reference to the accompanying figures. It will be appreciated that for simplicity and clarity of illustration, elements shown in the drawings have not necessarily been drawn accurately or to scale. For example, the dimensions of some of the elements may be exaggerated relative to other elements or several physical components may be included in one functional block or element. Further, where considered appropriate, reference numerals may be repeated among the drawings to indicate corresponding or analogous elements, however, not every component may be labeled in every drawing. The Figures are provided for the purposes of illustration and explanation and are not intended as a definition of the limits of the disclosure. In the Figures:
Figure 1 is a perspective view of a device in accordance with an aspect of the present disclosure;
Figure 2 is a representation of the operation of the device in Figure 1;
Figure 3 is a perspective view of a device in accordance with another aspect of the present disclosure;
Figure 4 is a representation of the operation of the device in Figure 3;
Figures 5-10 represent light traveling in the devices of Figures 1 and 3;
Figure 11 is a view of a device in accordance with an aspect of the present disclosure;
Figure 12 is a view of a device in accordance with another aspect of the present disclosure;
Figure 13 is a view of devices in accordance with various aspects of the present disclosure;
Figures 14 and 15 represent light traveling within the device of Figure 12;
Figure 16 presents a portion of the device in accordance with an aspect of the present disclosure;
Figure 17 is a close-up view of the portion of the device shown in Figure 16;
Figure 18 presents another portion of the device in accordance with an aspect of the present disclosure;
Figure 19 is a close-up view of the portion of the device shown in Figure 18;
Figure 20 presents a device in accordance with another aspect of the present disclosure;
Figure 21 presents a device in accordance with another aspect of the present disclosure;
Figures 22- 24 are perspective views of devices in accordance with aspects of the present disclosure;
Figure 25 is a device in accordance with an aspect of the present disclosure;
Figures 26a-26c present devices in accordance with various aspects of the present disclosure;
Figure 27 is a graph depicting a ratio of the refractive index of an unknown medium to the refractive index of a known medium;
Figure 28 present refractive indices of fuel products of different octanes from different suppliers;
Figures 29A and 29B are variations of the shape of the device in accordance with various aspects of the present disclosure; and
Figure 30 is a block diagram of a system in accordance with an aspect of the present disclosure.

### DETAILED DESCRIPTION

Details are set forth in order to provide a thorough understanding of the aspects of the disclosure. It will be understood by those of ordinary skill in the art that these teachings may be practiced without some of these specific details. In other instances, well-known methods, procedures, components and structures may not have been described in detail so as not to obscure the aspects of the disclosure.

### TERMINOLOGY

To aid in the understanding of various aspects of the present disclosure, without otherwise being limiting, the following definitions may apply.

Medium: A material of interest that has an unknown refractive index at the time of measurement. Though typically illustrated herein by examples of fluids, the medium may also be in another state such as a gas or a solid and still be measured under the same principles described herein. Also may be referred to as a Medium Under Test.

Active Area: A portion of a sensor, device or structure, described in more detail below, that is placed in the medium. The active area is made of a material with a known refractive index. Also may be referred to as a receptive area or a sensitive area.

Optical Pipe / Path / Pathway: A path that is used to guide light from an optical light source to, and then through, the active area and then to a receiver.

Optical Light Source / Emitter: A light source such as, but not limited to, an LED or laser device.

Receiver: A device for measuring optical energy such as, but not limited to, a photodiode, phototransistor or a CCD camera.

Loop - One variation of an active area geometry that follows a 180° bend.

Fin - A second variation of active area geometry with a 180° bend, but additionally has a center inactive area filled.

While there are known devices in the market that measure characteristics of a fluid, most are only capable of operating in a tightly controlled environment such as a room temperature lab. This mode of operation incurs an exceptional cost per device due to the sensitivity of the design to its environment and its associated calibration requirements.

Generally, and as an overview of the various aspects of the present disclosure, a medium or fluid is characterized by applying the principles of refractive index and the total internal reflection model for fiber optics.

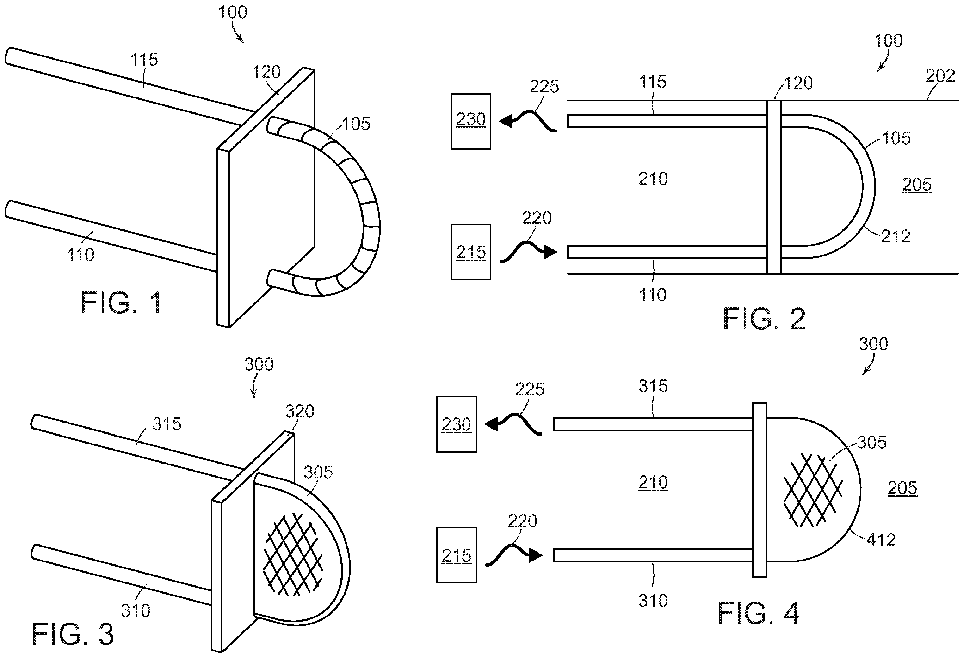

Accordingly, a device 100, as shown in Figure 1, is made from a material having a first known refractive index (RI-1K). An optical waveguide loop has an input pipe portion 110 and an output pipe portion 115. A mount 120 can be provided to separate the loop 105 from the input and output pipe portions 110, 115. As will be explained in more detail below, the mount 120 can operate in at least two roles: 1) it can be used to mechanically secure the device 100 to a larger assembly; and 2) it can provide a seal/barrier between a medium under test and a reference environment. It should be noted that aspects of the present disclosure are not limited to the device 100 including the mount 120 as other approaches to isolating the medium under test can be employed. Thus, for example, the device 100 can still perform as described herein by, e.g., inserting the device 100 through a self-healing membrane.

In operation, the loop 105 is placed within a material under test 205 and the input and output pipe portions 110, 115 are in a known material 210 having a second known refractive index (RI-2K), for example, air, as shown in Figure 2. The mount 120 functions to isolate the two mediums 205, 210 when positioned, for example, within a structure 202. An active area 212 of the loop 105 is in the medium under test 205. The material under test 205 is assumed, or expected, to have an unknown refractive index (RI-UK) lower than the known refractive index (RI-1K) of the optical pipe 105.

The shape of the optical pipe can be chosen such that the emitter and the receiver can be located outside of the medium under test 205 while allowing the medium-sensitive portion, i.e., the active area 212, to be immersed in the medium under test 205 as will be discussed below.

An optical source 215, produces diffused or scattered light 220, i.e., light rays at all angles, to the input pipe portion 110 and into the loop portion 105 that is placed in the medium under test 205.

Due to the different RIs of the optical pipe 105 and medium under test 205, the optical pipe 105 will reflect internal wavelengths up to a known critical angle. The critical angle and, therefore, the proportional loss of light along the path, is dependent on a difference between the known refractive index (RI-1K) of the optical pipe 105 and the unknown refractive index (RI-UK) of the surrounding medium under test 205.

Light 225 will be output from the output pipe portion 115 and measured by a light sensor 230. The received light 225 is converted by the light sensor 230 to an electrical signal, for example, voltage or current, as is understood by those of ordinary skill in the art. The light sensor 230 can be, for example, but not limited to, a photodiode, a phototransistor, a CCD camera or the like.

A percentage of the light lost in the optical pathway, as measured at its output, will be proportional to a difference in the RI of the optical pipe 105, i.e., the known refractive index RI-1K of its optical fiber material, and the unknown refractive index RI-UK of the medium under test 205, where all light above the critical angle into the medium under test will be lost.

In one aspect of the present disclosure, the measurement of the output light can be relative to a "golden" calibration level that is set during production. In one approach to calibration, a calibration reference measurement is set by measuring the response in air, i.e., where the medium under test 205 is open air. It is noted that room air would be sufficient as a reference. The respective refractive indices (RIs) of a vacuum vs "clean room air" vs "factory floor air" vs "dirty air" differ by a relatively small amount with respect to an intended range of measurements and would not, therefore, impact the calibration procedure. Accordingly, all other fluids that might be measured would have a response proportionally lower than that. An another approach to calibration in accordance with another aspect of the present disclosure can sample a reference medium of air (RI = 1), one of water (RI = 1.33) and a stable high index fluid, e.g., mineral oil (RI ~ 1.47) to establish a multi-point calibration reference.

The water can be "distilled" or "de-ionized" water to provide a relatively more controlled and yet, inexpensive, calibration standard. Tap water will have minerals and other contributing particulates that might shift slightly, and may differ from one location to another, more so than variations in air as discussed above. Accordingly, a recommended practice is to use a water source with a level of control (e.g., no additives) and repeatability. Similarly, the mineral oil should be chosen such that its characteristics are consistent. Ultimately, the calibration standards need to be measured and validated in order to provide a repeatable and accurate process.

The light signal 225 coming from an end of the output pipe portion 115, after passing through the medium under test 205, is measured. From this measurement, one can determine the unknown refractive index RI-UK of the medium under test 205 relative to the known refractive index RI-1K of the optical pipe material 105 and, therefore, the refractive index of the medium under test 205 can be determined.

The input light signal 220, in one non-limiting example, is at a wavelength of ~940 nm. It is expected that a nominal range of refractive index of the material under test 205 is in a range of 1.33 (water) to 1.49 (just above diesel). It is noted that aspects of the present disclosure are operative over a wide range of wavelengths, from FIR up to the visible wavelengths. The example light source, i.e., an IR LED, and photodiode receiver set the range of wavelengths from ~800 to 1000 nm. Within that range of wavelengths the RI of the fluids of interest does not vary enough to be of a concern. A different light source and receiver can measure a different wavelength response, which then could result in a change in RI over the wavelengths. The treatment of the RI herein as a constant is a consequence of the example emitter and receiver components selected and is not a limitation of the disclosed probe design.

The device 100, aside from the mount 120, is monolithic and can be made of a generic PMMA (Acrylic/Plexiglas) for placement in most fuels and has a relatively large RI (1.49) for detecting diesel, but not overly large in order to maximize the response range. Polycarbonate (Lexan) can also be used but has a higher refractive index (~1.59), so sensitivity/resolution is reduced. It is noted that the range of response is from 1 to the unknown refractive index (RI-UK) of the material under test 205 and, therefore, to obtain maximum sensitivity it is desirable to have a material with a first known refractive index RI-1K just slightly larger than an expected maximum refractive index of the fluid medium under test 205.

It is also noted that different materials can be better suited for different process fluids. "Biodiesel-resistant acrylic" plastic blends may be better suited than generic acrylic in terms of long term wear. A glass or non-plastic material may be better for acids or highly corrosive fluids.

Advantageously, this design can use an injection molded pipe connected to commercially available emitters and receivers and thus significantly reduce the production cost, in terms of both labor and material. In addition, variations, i.e., mechanical tolerances, in the geometry from part-to-part are reduced, further improving large volume production.

The device 100 may be manufactured with additive processes, i.e., 3D printing, but those materials may have a less desirable RI range, however, they may be "good enough" if the added flexibility of 3D printing for manufacturing provides a desirable value. The current state of the art of 3D printing results in a less than optimum result. 3D printing tends to build the part in layers which introduces internal and surface finish defects and results in a loss of optical energy throughout the path, i.e., a general efficiency loss.

In another aspect of the present disclosure, as shown in Figure 3, a device 300 is made from a material having a first known refractive index (RI-3K). An optical waveguide fin 305 has an input pipe portion 310 and an output pipe portion 315. A mount 320 is provided to separate the fin 305 from the input and output pipe portions 310, 315.

In operation, and similar to the foregoing with respect to the device 100, the fin 305 is placed within the material under test 205 and the input and output pipe portions 310, 315 are in the known material 210 having a second known refractive index (RI-2K), as shown in Figure 4. The mount 320 functions to isolate the two mediums 205, 210. An active area 412 of the fin 305 is in the medium under test 205. The material under test 205 is assumed, or expected, to have a refractive index (RI-UK) lower than the known refractive index (RI-1K) of the fin 305.

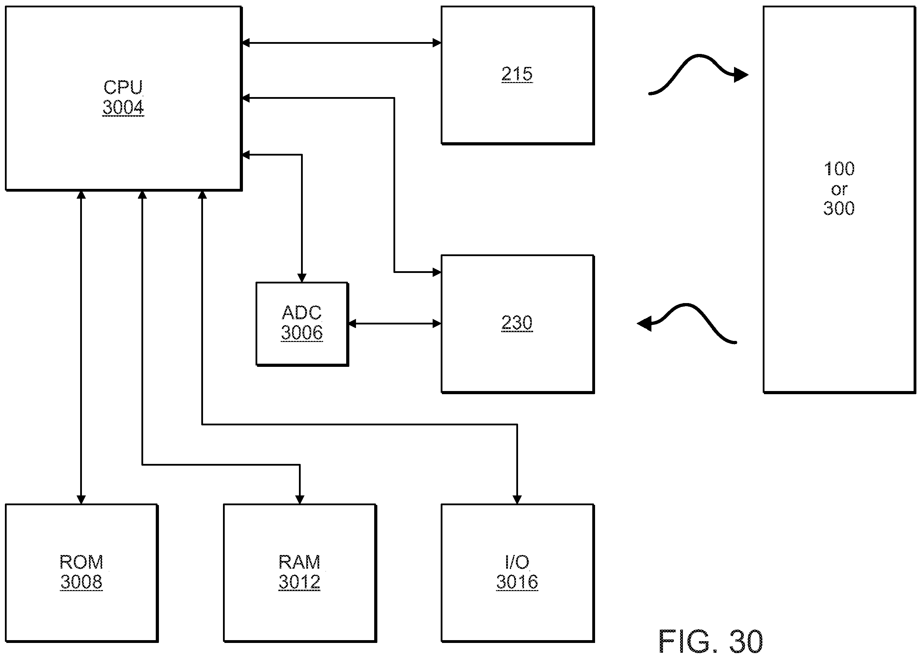

Referring now to Figure 30, the optical source 215 and the light sensor 230 can be operatively coupled to a CPU 3004 configured to operate per the teachings herein. In one aspect, if the CPU 3004 is not already provided with analog inputs, then an Analog-to-Digital Converter (ADC) 3006 can be coupled between the light sensor 230 and the CPU 3004. Similarly, the optical source can be driven by an analog output of the CPU, or a Digital to Analog Converter (DAC) coupled between the optical source and the CPU. The optical source may also be a fixed power output (on/off with no brightness control) which can then be controlled, either by digital or analog signals, by the CPU or another component as is understood by one of ordinary skill in the art. The CPU 3004 can be coupled to ROM 3008, RAM 3012 and I/O 3016 as would be understood by one of ordinary skill in the art. A program to control the CPU 3004 can be stored in either, or both, of the ROM 3008 and the RAM 3012 as is described below in more detail. Further, although not shown, the foregoing components may communicate over a common bus.

Operation of the device 300 proceeds as has been described above with respect to the device 100.

Each of the devices 100, 300 includes geometric feature that provide a "shaping" of the incoming light 220 from the optical light source 215 prior to arriving in the active area 212, 412. By shaping the source path, the geometry of the device "downstream" and outside of the shaped zone has a minimum, or negligible, effect on the response characteristics of the active area. In other words, the loop 105 and the fin 305 function the same way even though the fin 305 is "solid."

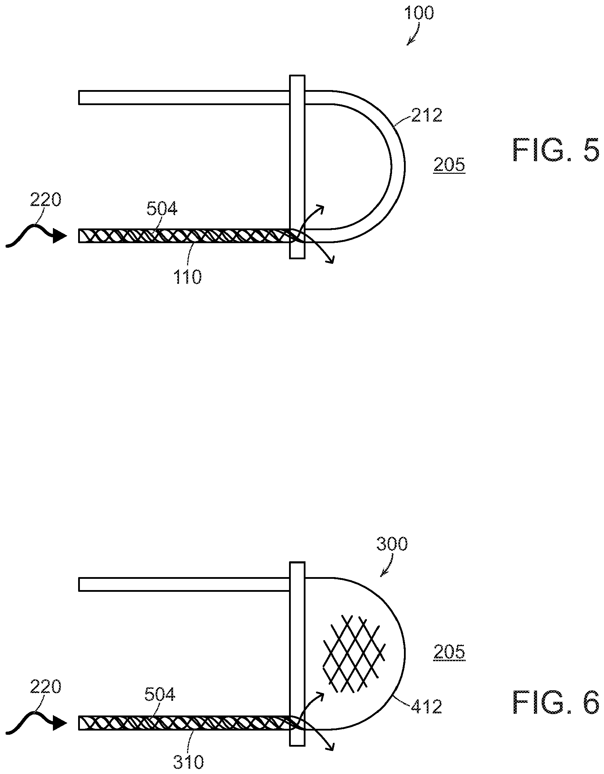

Referring now to Figure 5 and Figure 6, the devices 100, 300 maximize the randomness, or diffusion, of the optical angles propagating in the pipe prior to contact with the medium under test 205. As losses are proportional to the refractive critical angle, i.e., the known refractive index RI-1K vs the unknown refractive index RI-UK critical angle discussed above, a distribution of incident angles 504 within the input pipe portions 110, 310 is provided such that changes in the cut-off, or critical, angle show an equal loss in energy per degree of angle change, approaching a uniform loss of energy per degree. If a more linear light source, e.g., a laser, is used then a method of diffusion or scattering to achieve the desired behavior would be necessary. In one approach, such diffusion or scattering can be incorporated directly into the sensor mechanical geometry.

As is understood by those of ordinary skill in the art, at an exit of a fiber optic pipe, the angles of the emitter light rays are limited to the numerical aperture (NA) of the fiber optic section, regardless of the properties (angle) of the light source, effectively a maximum clamping limit. Thus, if the emitter beam angle is less than the fiber optic acceptance angle, the output beam angle of the fiber optic will match the emitter beam angle. For a sufficiently long pipe, i.e., one with at least one internal bounce, any source light rays 220 entering at an angle larger than the admittance angle will be lost/rejected before reaching the end of the pipe.

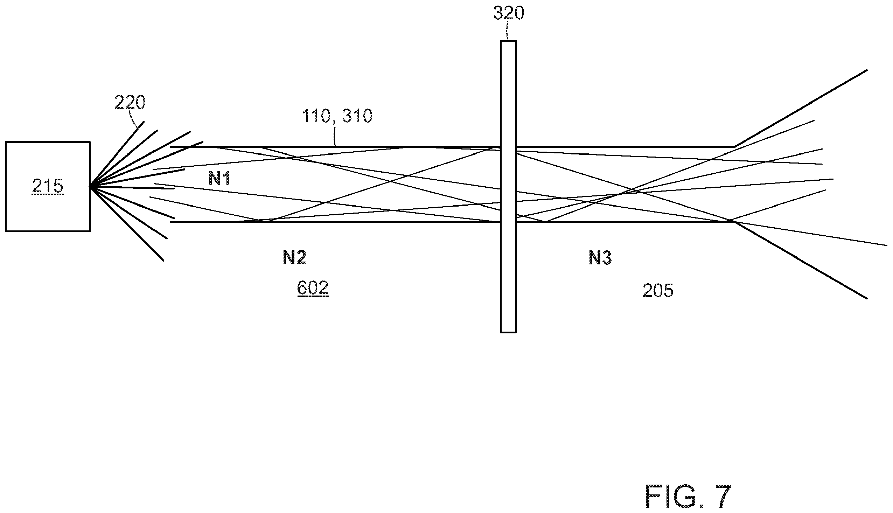

By inserting an optic pipe, i.e., the input pipe portions 110, 310, between the light source 215 and the active areas 212, 412, better control of the ray angles hitting the active areas 212, 412, in terms of placement and maximum spread angle, is achieved. Thus, with reference to Figure 7, when the input pipe portions 110, 310 have a refractive index N1 and a medium or cladding 602 surrounding the input pipe portions 110, 310 has a refractive index N2, where N2>N1, then the ratio of N2/N1 establishes the maximum output angle entering into the active region. Advantageously, if the medium under test 205 has a refractive index N3, where N3>N2, then the light rays entering are already below the N3/N1 critical angle for total internal reflection.

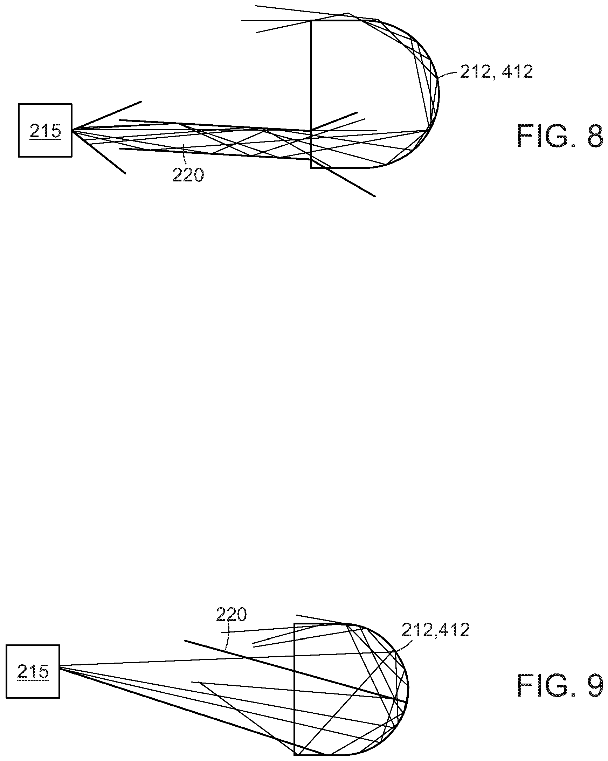

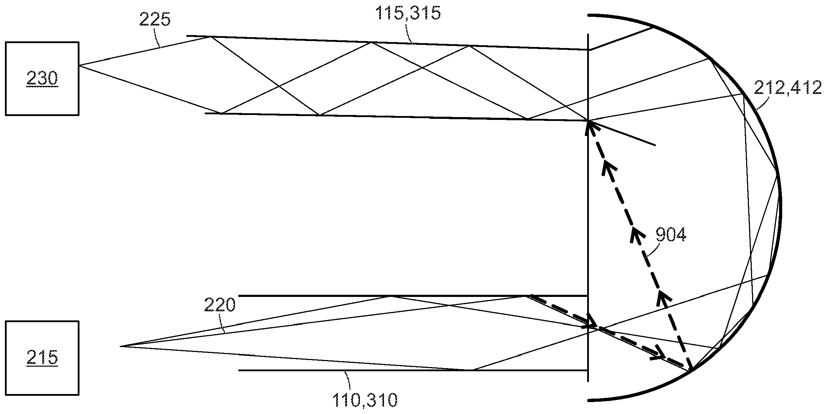

Conceptually, by constraining the angles at which the light impacts the active area 212, 412, via the input pipe portions 110, 310, the light 220 is set up to optimally "hug" the active areas 212, 412 on entry as shown in Figure 8 in contrast to the unconstrained angles represented in Figure 9. Likewise, the output pipe portions 115, 315 implement a similar effect, further eliminating stray rays from interfering with the behavior, as shown in Figure 10. This constrained behavior provides the flexibility to change geometry outside of the active areas 212, 412 with minimal or no impact to performance. Further, as presented in Figure 10, a light beam 904 bypasses the active regions 212, 412 and is rejected by the output pipe portions 115, 315.

Advantageously, each of the input pipe portions 110, 310 also acts as a homogenizer that minimizes the error/effect of the light source 215 being off-axis with respect to the input pipe portions 110, 310 which may be due to part-to-part variation or tolerance build up.

It is noted that there are a number of "light pipe" designs that can be used for the input pipe portions 110, 310 and the output pipe portions 115, 315, with some being slightly more efficient (in terms of light loss). Oval, square, or rectangular cross sections would be simple examples. The role of the input and output portions is to constrain the maximum angle of light rays and homogenize the light ray distribution.

In another aspect of the present disclosure, there is provided a sensor 1000 that is suitable for mass volume production and that operates with lower cost elements such as an injection molded body, and off-the-shelf LED emitters and photodiode or phototransistor receivers. Those of ordinary skill in the art of high precision analog sensor design will recognize that there is a wide variation in the nominal performance of LED emitters and photodiodes and phototransistors with respect to lot to lot variation and performance over temperature, generally 30% part-to-part with 0.1% per °C changes. Advantageously, aspects of the device 1000, and its operation, minimize the impact of this variability and achieve improved performance at a reduced part cost.

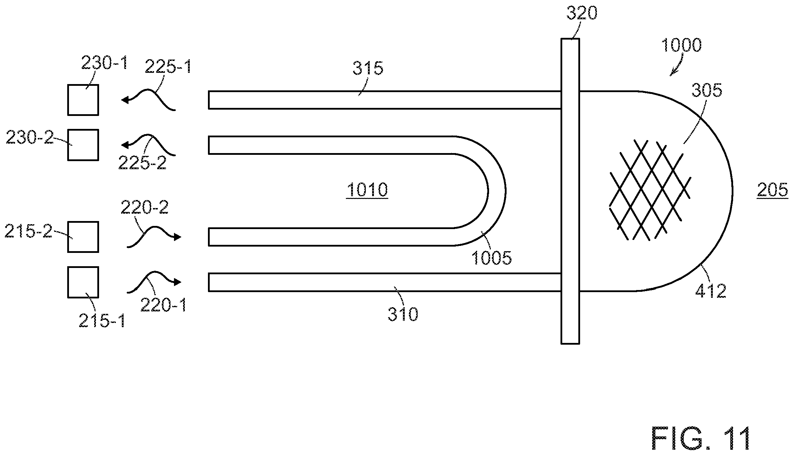

Referring now to Figure 11, the device 1000 is a modification of the devices 100, 300. Accordingly, the device 1000 includes, when based on the device 300, for example, the optical waveguide fin 305 with the input pipe portion 310 and the output pipe portion 315. The mount 320 is provided to separate the fin 305 from the input and output pipe portions 310, 315. One of ordinary skill will understand the corresponding components when based on the device 100.

The device 1000 provides a ratiometric measurement rather than an absolute measurement in contrast to the operation of the devices 100, 300. A reference path or loop 1005 is included, however, the reference loop 1005 does not pass through the medium under test 205 but, rather, is provided within a reference medium 1010 where the mount 320 separates the two mediums. As a result, the reference loop 1005 provides a constant loss path regardless of the medium under test 205.

Similar to the operation of the devices 100, 300 described above, the fin 305 receives light 220-1 from a respective light source 215-1 and the output light 225-1 is measured by a respective detector 230-1. In addition, the reference loop 1005 receives light 220-2 from a respective light source 215-2 and the output light 225-2 is measured by a respective detector 230-2. By tightly coupling the light source 215-2 and the light detector 230-2 of the reference loop 1005 to the light source 215-1 and the light detector 230-1 of the medium measurement path 305, the behavior and response of the light sources and light detectors will "track," that is, will tend to follow each other in terms of performance over temperature and age.

By comparing the measurement reading, i.e., a reference measure, at the output of the reference loop 1005 to the medium value reading from the fin 305, much of the error introduced by component age and temperature shift is negated and overall accuracy and performance is improved. In addition, ensuring the light source and detector components 215-x, 230-x are populated from the same production lot further improves this effect.

Further, in one embodiment of an aspect of the present disclosure, the reference loop 1005 can be made of a different material from that of the fin 305. As a result, the reference loop 1005 can have a predetermined refractive index value that is different than that of the fin 305.

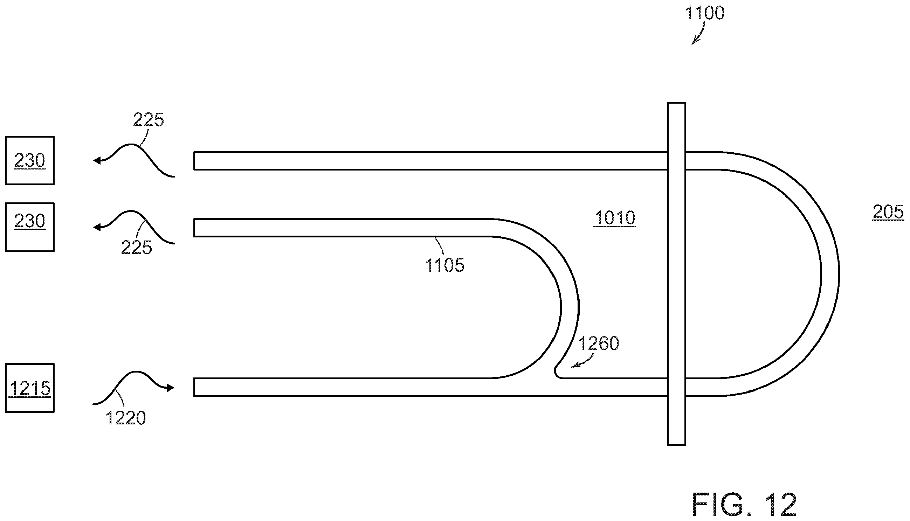

In another aspect of the present disclosure, in a device 1100, a reference loop 1105 branches off from the input optical pipe at a split 1260 as shown in Figure 12. The "active" loop and the reference loop share a common light source 1215 that provides light 1220 to eliminate one factor of variability all together. This concept can be further applied to the remainder of the processing path, for example, by including dual package op amps and/or gain/attenuator resistors in array packages as a continuation of the ratiometric or "tracking" design principles described herein.

The reference medium can be air or an encapsulant/potting material. The material selection requirements are: a) RI < sensor in order to act as a fiber optic cladding material, and b) constant over temperature and time to maintain a consistent reference optical path to compare against. The potting RI should also be below the minimum medium under test RI in order to gain the benefits described above. Further, if there are limitations to the potting material, a thin cladding layer can be applied on the reference region of the optical pipe (i.e., 110, 115 in the 210 region) prior to filling the remaining volume with potting material.

The reference loops 1005, 1105 and the input and output pipes are embedded in the reference medium 1010 that acts as a cladding around those portions. Those linear portions that are immersed in the medium under test 205 are unaffected if the refractive index of the reference medium 1010 is of a lower value than the medium under test, i.e., the unknown refractive index (RI-UK). For example, if the device material has an RI of 1.5, and the reference cladding 1010 has an RI of 1.31 then the light rays within the pipe will be limited to 61°. If the unknown refractive index RI-UK of the medium under test is 1.4, the hypothetical limit is 69° so any lights rays in the straight section immersed in the medium under test are unaffected.

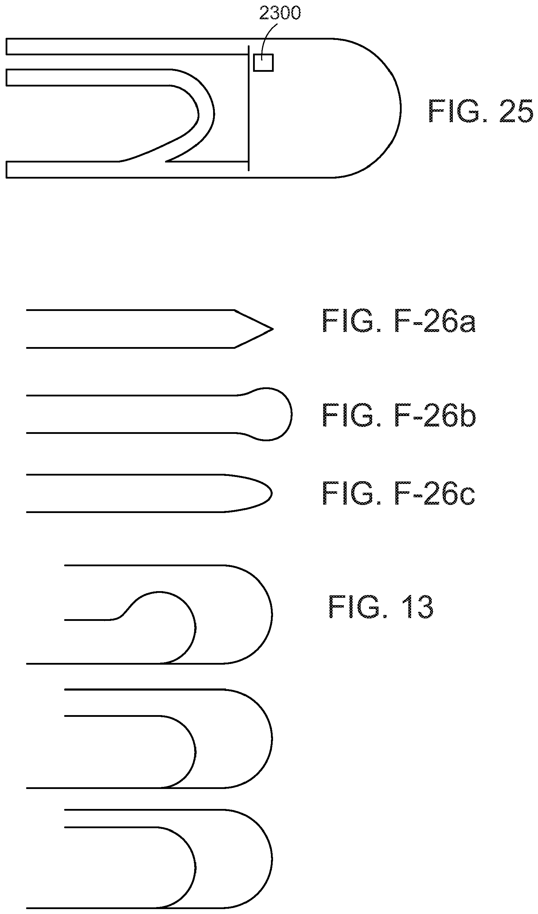

The geometry of the reference loop and the active loop need not be the same as shown in Figure 13. In addition, the reference and the measuring portions need not be co-planar with one another.

Using commercial off the shelf (COTS) components can reduce costs associated with aspects of the present disclosure, however, there can be some consequences. For example, one of the negatives of using an LED emitter type optical sources is that the tolerance on die placement within its own mechanical assembly may vary from device to device or from lot to lot. As the LED emitter is moved off the axis, error is introduced in the downstream measurement as there may be a change to the split ratio of the Y-geometry thus changing the proportion and distribution of rays entering the sensing area.

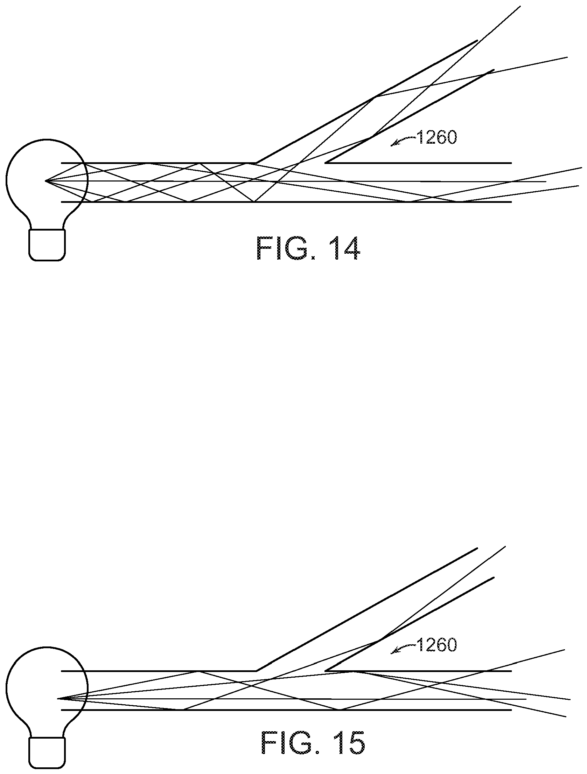

Accordingly, with reference to the device 1100 in Figure 12, i.e., using a common light source 1215 and separate reference and medium receivers, the split ratio refers to how much of the original energy from the emitter goes to the reference path versus the medium path. For example, as shown in Figure 14, an aspect of the present disclosure can be designed with a 50/50 split. If the emitter is moved off axis from the nominal design, what would normally be a 50/50 split might now be a 40/60 split, as shown in Figure 15 because there is not an even distribution of rays just before the split 1260.

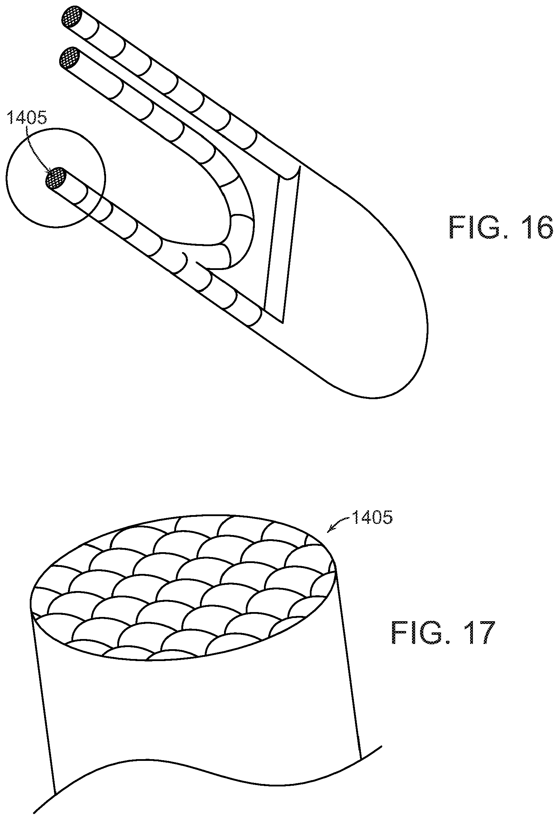

In one approach to reducing the effect of off-axis errors, a microlens or "fly's eye" array 1405 can be provided as shown in Figure 16 and Figure 17.

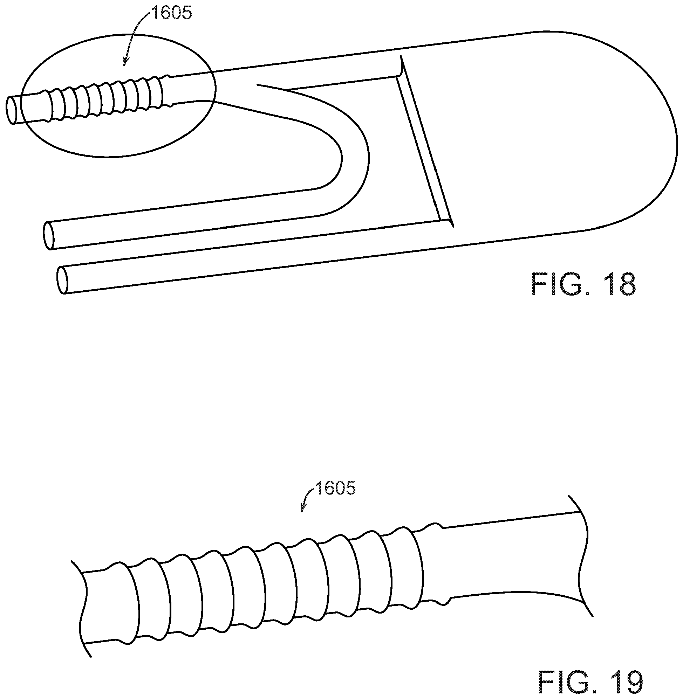

In another aspect of the present disclosure, referring to Figure 18 and Figure 19, the input pipe portion can have a section 1605 with varying diameters. The section 1605 operates to also randomize the incoming light and even out the distribution.

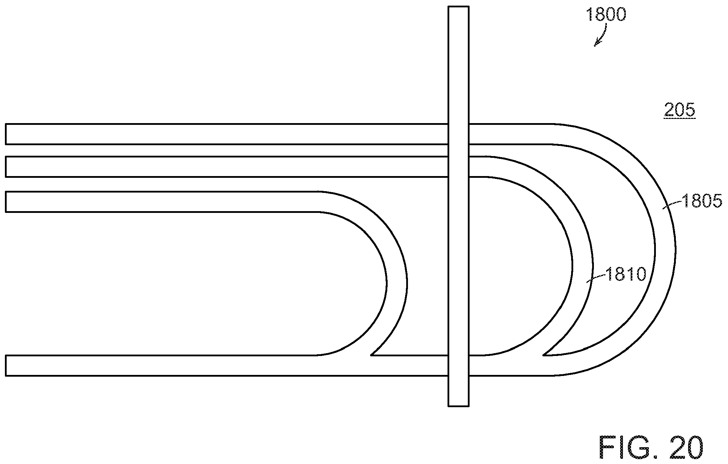

Referring now to Figure 20, a device 1800 in accordance with another aspect of the present disclosure includes multiple active loop paths 1805, 1810. As shown in Figure 20, the multiple paths 1805, 1810 are located within the medium under test 205 to provide redundancy and/or more surface area exposure of the sensitive area to further average out results. Its operation is consistent with the devices and aspects described above.

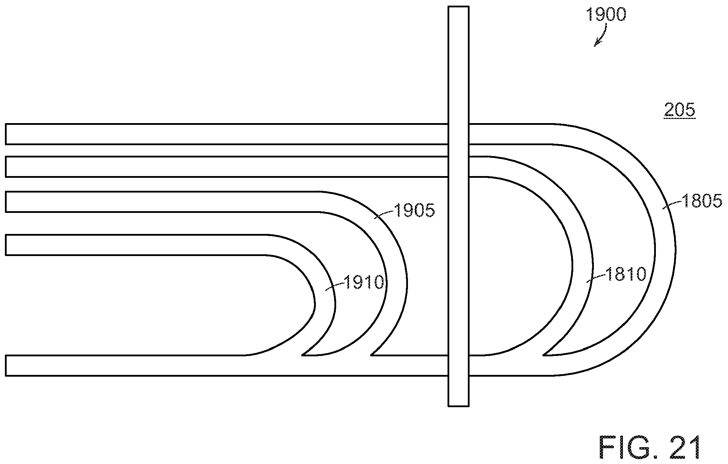

Alternatively, a device 1900 in accordance with another aspect of the present disclosure includes multiple reference loop paths 1905, 1910 as shown in Figure 21. Its operation is consistent with the devices and aspects described above.

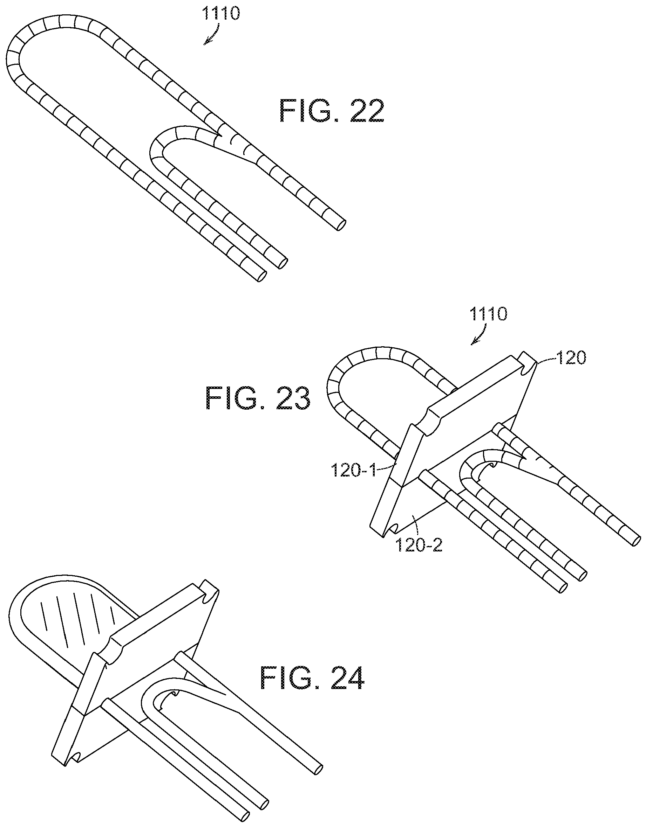

As shown in Figure 22 and Figure 23, with reference to the device 1110, the mount 120 can be provided as two mount parts 120-1, 120-2, that couple around the monolithic structure comprising the reference and active loops. One of ordinary skill in the art will understand that a two-part mount 120 can be implemented for the devices described herein as shown, for example, in Figure 24.

In an extension of the optical shaping concept, in accordance with another aspect of the present disclosure, a "cutout" such as a notch or hole 2300 to block reflection paths is provided in the active fin as shown in Figure 25. This is a strategic positioning of empty holes to block light transmission and allows the "shaping" effect to be refined further. The notch 2300, and there may be more than one provided, acts very similar in manner to the "shaping pipe" discussed herein as creating a material change (RI) between the sensor and surrounding material, whether it is the reference medium or fluid medium. These notches 2300 create a reflective surface (when the incident angle is less than the critical angle of total internal reflection) to redirect approaching rays. In one non-limiting example, the notch 2300 rejects stray rays from entering the receiver.

It another approach, it may be advantageous to place the holes within the reference medium or material half of the body because the critical angle would be constant as the reference material RI never changes. But placement within the medium under test would be acceptable as long as it is understood that the reflective surface effectiveness would change with the medium RI because a geometry that rejects at a lower medium RI may no longer work at a higher medium RI. It may be possible, however, to place holes at particular angles and locations to selectively allow different medium RI values to pass through or be blocked by different hole geometry, i.e., the internal ray path changes for different medium RI values.

The foregoing aspects of the present disclosure presented the fin and active loop in the shape of a half-circle. Embodiments of the present disclosure, however, are not limited to only a half-circle as other shape profiles can help emphasize or de-emphasize regions of the response range. Referring now to Figures 26a - 26c, aspects include an acute angle shape, a round shape with a flair out and a parabolic shape.

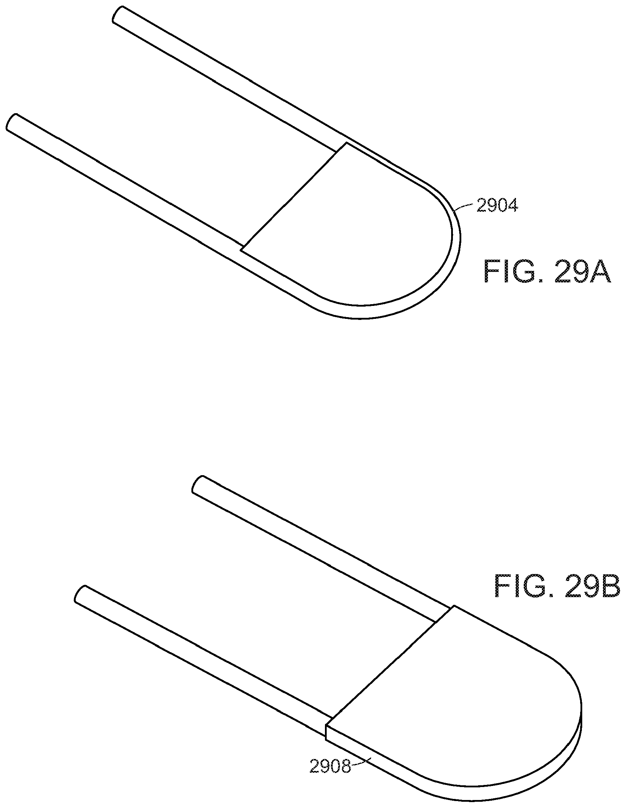

In some embodiments of the present disclosure, the active area, i.e., the fin or loop, can be made with an edge having a radius of curvature 2904 on its outer surface, as shown in Figure 29A or a flat, i.e., straight, edge 2908 as shown in Figure 29B. Either type of edge may be provided by a milling or a grinding process. The type of edge may provide an advantage when the sensor is placed in the medium under test.

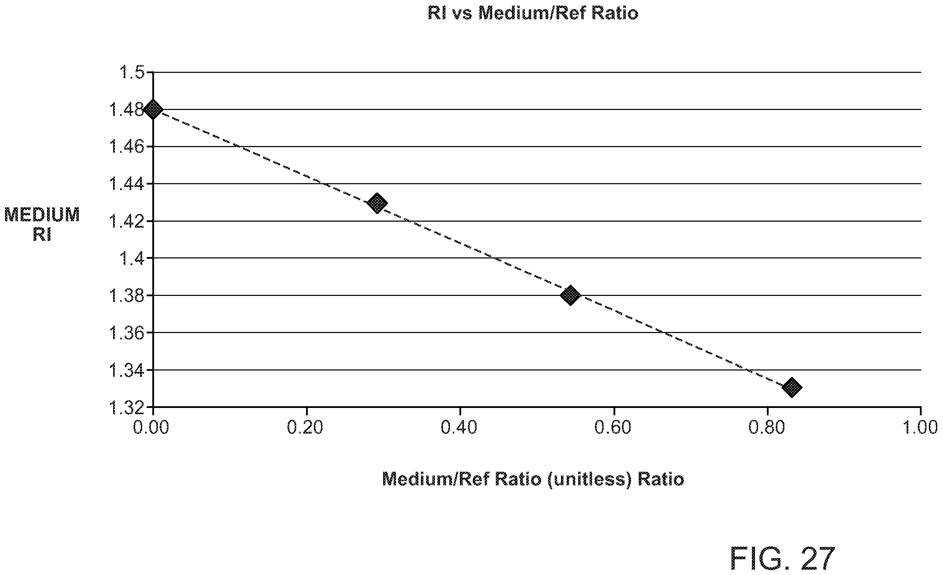

As set forth above, the received light (ref or medium) hits the light sensor to convert to an electrical signal (normally voltage, but current or energy/power detectors can also be used). The ratio of signal strengths, e.g., voltages such as the medium-under-test voltage vs the reference voltage, is used to determine an indication of the refractive index. The relation between RI and ratio, however, is not necessarily linear (e.g., y = mx+b), but with the exemplary cylindrical shape can be approximated with a linear or higher order polynomial as shown in Figure 27. Other active area shapes would likely result in a different RI to ratio mapping curve.

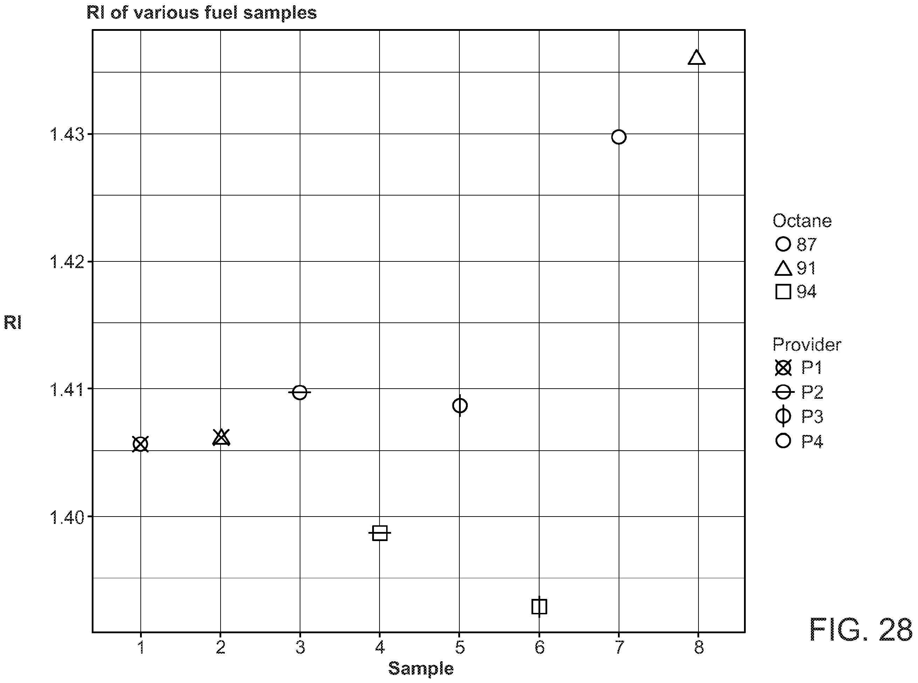

In addition, the sensors described herein provide an RI value, but do not, "by themselves," identify a specific type of liquid as multiple liquids could have the same RI value. There is a correlation between an RI value and a specific fuel, where higher octanes generally have a higher RI up to a certain point. This correlation of RI and a specific fuel, however, decreases dramatically as different octane additives are included. These additives include aromatics that are used from regular up to about 91 octane and, observations suggest ethanol is added to get up to 94 octane. A sampling of fuels and respective RIs, by octane and provider, is presented in Figure 28.

Advantageously, with aspects of the present disclosure the measured RI is a "fingerprint" more than a "value to specific liquid" mapping. As long as the fingerprint value does not change between loading and unloading, for example, it could be inferred that there has not been internal tank mixing or contamination.

Accordingly, with respect to detecting cross-contamination, in one non-limiting example, the sensors and methods disclosed herein measure a first "fingerprint" RI value during, for example, the loading of a fluid. At some point in time, but prior to unloading, a second RI measurement is taken. A difference between the first and second measurements may suggest a contamination or change has occurred and needs to be investigated before either unloading of the fluid or adding more. Similarly, if there is fluid in a compartment to which the fluid is to be added, then a measure of that fluid's RI would be taken and compared to the fluid to be added. One of ordinary skill in the art will understand that the sensors disclosed herein can be used in multiple different ways to detect and/or prevent fluid cross-contamination. Further, the RI sensors can be part of a cross-contamination prevention/detection system combined with other sensors, e.g., volume flow, digital tags, etc.

Aspects of the present disclosure can be expanded to include wide spectrum measurement (spectrometry-like index measurement) - e.g., a wide spectrum emitter and receiver, like an RGB LED + RGB sensor, or Xenon light and spectrometry-type receiver. Doing so provides a refractive index reading that is a function of wavelength. (LED emitter and diode receiver is effectively a single wavelength average response)

The sensors described herein can be used to characterize fluids in multiple industries dealing with, but not limited to: medical tests or treatments; blood and urine analysis; beer/wine/alcohols; sugar content; de-icing; water/glycol mix ratio; batteries; and water/electrolyte solutions.

Other advantages include, but are not limited to:
Optical coupling method - In contrast to some other medium characterization methods, with this design only optical power is in contact with the medium versus, for example, electronics or mechanical sensors positioned in the medium. The ability to measure the medium without having to position active electronic devices within the medium under test, for example, fuel, is of great benefit to those industries that deal with hazardous location concerns, i.e., risk of explosion, etc., such as the oil and gas industries.

Ease of changing material - By using an injection molding or master casting production process, a change to a different material is easily achieved. As the response range is a function of the material, flexibility of design is obtained. This flexibility allows for application to new industries that might require a different working response range of refractive index, or selecting a material that is more chemically suited to a different application, e.g., acid or other corrosive mediums.

It should be noted that in the devices 100, 300, the geometric feature from emitter pipe to active area provides for changes to the design in the non-active area that will not affect performance. This is advantageous as it provides for freedom in the design of such a sensor to incorporate mechanical features such as mounting bosses and other mechanical fixtures, process sealing approaches and mechanical supports to improve rigidity of the sensor. Thus, the sensor is durable and can operate in harsh process environments with very fast flow rates of the medium and is resistant to impact during handling and operation.

Further, by nature of incorporating design features into a single body, the added cost savings by part reduction and reduced labor cost can be realized as the features are incorporated into the sensor design.

Various implementations of the above-described systems and methods described herein may be provided in digital electronic circuitry, in computer hardware, firmware, and/or software, as shown in Figure 30. An implementation can be as a computer program product, e.g., a computer program tangibly embodied in an information carrier. The implementation can, for example, be in a machine-readable storage device, for execution by, or to control the operation of, data processing apparatus. The implementation can, for example, be a programmable processor, a computer, and/or multiple computers.

The above-described implementations generally depict a computer implemented system employing at least one processor or processing unit executing program steps out of at least one memory to obtain the functions herein described. It should be recognized that the presently described methods may be implemented via the use of software, firmware or alternatively, implemented as a dedicated hardware solution such as an FPGA (field programmable gate array) and/or an ASIC (application specific integrated circuit). Modules, subroutines, and software agents can refer to portions of the computer program, the processor or processing unit, the special circuitry, software, and/or hardware that implements that functionality.

In addition, an optical or electro-optical ASIC that incorporates the features of the optical designs described herein can be implemented as an alternative to injection molding, machining or 3D printing a sensor. Advantageously, the electro-optic ASIC incorporates both the optical elements and known ASIC elements in a single package.

A computer program can be written in any form of programming language, including compiled and/or interpreted languages, and the computer program can be deployed in any form, including as a stand-alone program or as a subroutine, element, and/or other unit suitable for use in a computing environment.

As utilized, the one or more processing units may represent, for example, a CPU-type processing unit, a GPU-type processing unit, a field-programmable gate array ("FPGA"), digital signal processor(s) ("DSP"), or other hardware logic components that may, in some instances, be driven by a central processing unit ("CPU").

The computer-readable medium may store instructions executable by the one or more processing units and may include computer storage media and/or communication media. Computer storage media may include one or more of volatile memory, nonvolatile memory, and/or other persistent and/or auxiliary computer storage media.

It is to be understood that the disclosure is not limited in its application to the details of construction and the arrangement of the components set forth herein or illustrated in the drawings as it is capable of implementations or of being practiced or carried out in various ways. Also, it is to be understood that the phraseology and terminology employed herein are for the purpose of description only and should not be regarded as limiting.

Certain features, which are, for clarity, described in the context of separate implementations, may also be provided in combination in a single implementation. Conversely, various features, which are, for brevity, described in the context of a single implementation, may also be provided separately or in any suitable sub-combination.

The present disclosure is illustratively described in reference to the disclosed implementations. Various modifications and changes may be made to the disclosed implementations by persons skilled in the art without departing from the scope of the present disclosure as defined in the appended claims.

## Claims

1. A device (100, 300) for measuring an optical characteristic of a fluid (205), comprising:
a first light pipe defining a first light path running from a first pipe input to a first pipe output;
a second light pipe defining a second light path separate from the first light path, running from a second pipe input to a second pipe output; and
a mount (120, 320) coupled to the first light pipe, the mount defining a separation of a first space having a fluid medium under test (205) from a second space having a reference medium (210), wherein the mount (120, 320) comprises a planar body having first and second sides, and wherein the first space is adjacent the first side and the second space is adjacent the second side,
wherein the first light pipe comprises a first material with a first predetermined refractive index (RI) value,
wherein the second light pipe comprises a second material with a second predetermined RI value,
wherein a sensing portion (212, 412) of the first light pipe is disposed in the first space, and
wherein the second light pipe is disposed entirely in the second space.

2. The device of claim 1, further comprising:
a first light source (215-1) configured and arranged to provide a first light input signal to the first pipe input;
a first light detector (230-1) configured and arranged to receive a first light output signal from the first pipe output;
a second light source (215-2) configured and arranged to provide a second light input signal to the second pipe input; and
a second light detector (230-2) configured and arranged to receive a second light output signal from the second pipe output.

3. The device of claim 2, further comprising:
a controller, coupled to the first and second light detectors (225), configured to compare the first and second light output signals to one another and to determine the optical characteristic of the fluid (205) as a function of the comparison.

4. The device of any one of claims 1-3, wherein the sensing portion (212, 412) of the first light pipe comprises a curved portion.

5. The device of any one of claims 1-4, wherein the second light pipe comprises a curved portion.

6. The device of any one of claims 1-5, wherein the first light pipe is a portion of an optical waveguide fin structure.

7. The device of any one of claims 1-6, wherein the second light pipe is separate from the first light pipe.

8. The device of claim 7, wherein the first and second predetermined RI values are the same.

9. The device of claim 7, wherein the first and second predetermined RI values are different.

10. The device of any one of claims 1-6, wherein the second light pipe is a branch off of the first light pipe.

11. The device of claim 10, wherein the second light pipe and the first light pipe have a common input.

12. The device of claim 11, further comprising:
a first light source (1215) configured and arranged to provide a first light input signal to the common input;
a first light detector (230) configured and arranged to receive a first light output signal from the first pipe output; and
a second light detector (230) configured and arranged to receive a second light output signal from the second pipe output.

13. The device of claim 12, further comprising:
a controller, coupled to the first and second light detectors (225), configured to compare the first and second light output signals to one another and to determine the optical characteristic of the fluid (205) as a function of the comparison.

14. The device of claim 1, further comprising:
a third light pipe, defining a third light path separate from each of the first and second light paths, running from a third pipe input to a third pipe output,
wherein the third light pipe is disposed entirely in the first space.

15. The device of claim 14, wherein the third light pipe is a branch off of the first light pipe.

## Patentansprüche

1. Vorrichtung (100, 300) zum Messen einer optischen Eigenschaft eines Fluids (205), umfassend:
einen ersten Lichtleiter, der einen ersten Lichtpfad definiert, der von einem Eingang eines ersten Leiters zu einem Ausgang eines ersten Leiters verläuft;
einen zweiten Lichtleiter, der einen zweiten Lichtpfad definiert, der von dem ersten Lichtpfad getrennt ist und von einem Eingang des zweiten Leiters zu einem Ausgang des zweiten Leiters verläuft; und
eine Halterung (120, 320), die mit dem ersten Lichtleiter gekoppelt ist, wobei die Halterung eine Trennung eines ersten Raums, der ein zu prüfendes Fluidmedium (205) aufweist, von einem zweiten Raum, der ein Referenzmedium (210) aufweist, definiert, wobei die Halterung (120, 320) einen planaren Körper mit einer ersten und einer zweiten Seite umfasst, und wobei der erste Raum an die erste Seite angrenzt und der zweite Raum an die zweite Seite angrenzt,
wobei der erste Lichtleiter ein erstes Material mit einem ersten vorbestimmten Brechungsindexwert (RI) umfasst,
wobei der zweite Lichtleiter ein zweites Material mit einem zweiten vorbestimmten RI-Wert umfasst,
wobei ein Erfassungsabschnitt (212, 412) des ersten Lichtleiters in dem ersten Raum angeordnet ist, und
wobei der zweite Lichtleiter vollständig in dem zweiten Raum angeordnet ist.

2. Vorrichtung nach Anspruch 1, ferner umfassend:
eine erste Lichtquelle (215-1), die dazu konfiguriert und angeordnet ist, ein erstes Lichteingangssignal an den Eingang des ersten Leiters bereitzustellen;
einen ersten Lichtdetektor (230-1), der dazu konfiguriert und angeordnet ist, ein erstes Lichtausgangssignal von dem Ausgang des ersten Leiters zu empfangen;
eine zweite Lichtquelle (215-2), die dazu konfiguriert und angeordnet ist, ein zweites Lichteingangssignal an den Eingang des zweiten Leiters bereitzustellen; und
einen zweiten Lichtdetektor (230-2), der dazu konfiguriert und angeordnet ist, ein zweites Lichtausgangssignal von dem Ausgang des zweiten Leiters zu empfangen.

3. Vorrichtung nach Anspruch 2, ferner umfassend:
eine Steuerung, die mit dem ersten und dem zweiten Lichtdetektor (225) gekoppelt ist und dazu konfiguriert ist, das erste und das zweite Lichtausgangssignal miteinander zu vergleichen und die optische Eigenschaft des Fluids (205) als eine Funktion des Vergleichs zu bestimmen.

4. Vorrichtung nach einem der Ansprüche 1-3, wobei der Erfassungsabschnitt (212, 412) des ersten Lichtleiters einen gekrümmten Abschnitt umfasst.

5. Vorrichtung nach einem der Ansprüche 1-4, wobei der zweite Lichtleiter einen gekrümmten Abschnitt umfasst.

6. Vorrichtung nach einem der Ansprüche 1-5, wobei der erste Lichtleiter ein Abschnitt einer optischen Wellenleiter-Rippenstruktur ist.

7. Vorrichtung nach einem der Ansprüche 1-6, wobei der zweite Lichtleiter von dem ersten Lichtleiter getrennt ist.

8. Vorrichtung nach Anspruch 7, wobei der erste und der zweite vorbestimmte RI-Wert gleich sind.

9. Vorrichtung nach Anspruch 7, wobei der erste und der zweite vorbestimmte RI-Wert verschieden sind.

10. Vorrichtung nach einem der Ansprüche 1-6, wobei der zweite Lichtleiter eine Abzweigung des ersten Lichtleiters ist.

11. Vorrichtung nach Anspruch 10, wobei der zweite Lichtleiter und der erste Lichtleiter einen gemeinsamen Eingang aufweisen.

12. Vorrichtung nach Anspruch 11, ferner umfassend:
eine erste Lichtquelle (1215), die dazu konfiguriert und angeordnet ist, ein erstes Lichteingangssignal an den gemeinsamen Eingang bereitzustellen;
einen ersten Lichtdetektor (230), der dazu konfiguriert und angeordnet ist, ein erstes Lichtausgangssignal von dem Ausgang des ersten Leiters zu empfangen; und
einen zweiten Lichtdetektor (230), der dazu konfiguriert und angeordnet ist, ein zweites Lichtausgangssignal von dem Ausgang des zweiten Leiters zu empfangen.

13. Vorrichtung nach Anspruch 12, ferner umfassend:
eine Steuerung, die mit dem ersten und dem zweiten Lichtdetektor (225) gekoppelt ist und dazu konfiguriert ist, das erste und das zweite Lichtausgangssignal miteinander zu vergleichen und die optische Eigenschaft des Fluids (205) als eine Funktion des Vergleichs zu bestimmen.

14. Vorrichtung nach Anspruch 1, ferner umfassend:
einen dritten Lichtleiter, der einen dritten Lichtpfad definiert, der von jedem des ersten und zweiten Lichtpfads getrennt ist und von einem Eingang eines dritten Leiters zu einem Ausgang eines dritten Leiters verläuft,
wobei der dritte Lichtleiter vollständig in dem ersten Raum angeordnet ist.

15. Vorrichtung nach Anspruch 14, wobei der dritte Lichtleiter eine Abzweigung des ersten Lichtleiters ist.

## Revendications

1. Dispositif (100, 300) de mesure d'une caractéristique optique d'un fluide (205), comprenant :
un premier conduit de lumière définissant un premier chemin de lumière s'étendant d'une première entrée de conduit à une première sortie de conduit ;
un deuxième conduit de lumière définissant un deuxième chemin de lumière séparé du premier chemin de lumière, s'étendant d'une deuxième entrée de conduit à une deuxième sortie de conduit ; et
un support (120, 320) couplé au premier conduit de lumière, le support définissant une séparation d'un premier espace ayant un milieu fluide sous test (205) d'un second espace ayant un milieu de référence (210), dans lequel le support (120, 320) comprend un corps plat ayant des premier et second côtés, et dans lequel le premier espace est adjacent au premier côté et le second espace est adjacent au second côté,
dans lequel le premier conduit de lumière comprend un premier matériau avec une première valeur d'indice de réfraction (RI) prédéterminée,
dans lequel le deuxième conduit de lumière comprend un second matériau avec une seconde valeur RI prédéterminée,
dans lequel une partie de détection (212, 412) du premier conduit de lumière est disposée dans le premier espace, et
dans lequel le deuxième conduit de lumière est disposé entièrement dans le second espace.

2. Dispositif selon la revendication 1, comprenant en outre :
une première source de lumière (215-1) configurée et agencée pour fournir un premier signal d'entrée de lumière à la première entrée de conduit ;
un premier détecteur de lumière (230-1) configuré et agencé pour recevoir un premier signal de sortie de lumière provenant de la première sortie de conduit ;
une seconde source de lumière (215-2) configurée et agencée pour fournir un second signal d'entrée de lumière à la deuxième entrée de conduit ; et
un second détecteur de lumière (230-2) configuré et agencé pour recevoir un second signal de sortie de lumière provenant de la deuxième sortie de conduit.

3. Dispositif selon la revendication 2, comprenant en outre :
un dispositif de commande, couplé aux premier et second détecteurs de lumière (225), configuré pour comparer les premier et second signaux de sortie de lumière l'un à l'autre et pour déterminer la caractéristique optique du fluide (205) en fonction de la comparaison.

4. Dispositif selon l'une quelconque des revendications 1 à 3, dans lequel la partie de détection (212, 412) du premier conduit de lumière comprend une partie incurvée.

5. Dispositif selon l'une quelconque des revendications 1 à 4, dans lequel le deuxième conduit de lumière comprend une partie incurvée.

6. Dispositif selon l'une quelconque des revendications 1 à 5, dans lequel le premier conduit de lumière est une partie d'une structure d'ailette de guide d'ondes optique.

7. Dispositif selon l'une quelconque des revendications 1 à 6, dans lequel le deuxième conduit de lumière est séparé du premier conduit de lumière.

8. Dispositif selon la revendication 7, dans lequel les première et seconde valeurs RI prédéterminées sont les mêmes.

9. Dispositif selon la revendication 7, dans lequel les première et seconde valeurs RI prédéterminées sont différentes.

10. Dispositif selon l'une quelconque des revendications 1 à 6, dans lequel le deuxième conduit de lumière est une dérivation du premier conduit de lumière.

11. Dispositif selon la revendication 10, dans lequel le deuxième conduit de lumière et le premier conduit de lumière ont une entrée commune.

12. Dispositif selon la revendication 11, comprenant en outre :
une première source de lumière (1215) configurée et agencée pour fournir un premier signal d'entrée de lumière à la première entrée commune ;
un premier détecteur de lumière (230) configuré et agencé pour recevoir un premier signal de sortie de lumière provenant de la première sortie de conduit ; et
un second détecteur de lumière (230) configuré et agencé pour recevoir un second signal de sortie de lumière provenant de la deuxième sortie de conduit.

13. Dispositif selon la revendication 12, comprenant en outre : un dispositif de commande, couplé aux premier et second détecteurs de lumière (225), configuré pour comparer les premier et second signaux de sortie de lumière l'un à l'autre et pour déterminer la caractéristique optique du fluide (205) en fonction de la comparaison.

14. Dispositif selon la revendication 1, comprenant en outre :
un troisième conduit de lumière, définissant un troisième chemin de lumière séparé de chacun des premier et deuxième chemins de lumière, s'étendant d'une troisième entrée de conduit à une troisième sortie de conduit,
dans lequel le troisième conduit de lumière est disposé entièrement dans le premier espace.

15. Dispositif selon la revendication 14, dans lequel le troisième conduit de lumière est une dérivation du premier conduit de lumière.
